(19)

Europäisches
Patentamt
European
Patent Office
Office européen
des brevets

(11) **EP 4 675 948 A1**

(12) **EUROPEAN PATENT APPLICATION**

(43) Date of publication:
**07.01.2026 Bulletin 2026/02**

(21) Application number: 24185783.8

(22) Date of filing: **01.07.2024**

(51) International Patent Classification (IPC):
***H04L 1/00*** *(2006.01)*  ***H04L 25/497*** *(2006.01)*

(52) Cooperative Patent Classification (CPC):
**H04L 25/497; H04L 1/0057**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Technische Universität München, in
Vertretung des Freistaats Bayern
80333 München (DE)**

(72) Inventors:
• **RUNGE, Constantin
80333 München (DE)**
• **KRAMER, Gerhard
80333 München (DE)**

(74) Representative: **Hoefer & Partner Patentanwälte
mbB
Pilgersheimer Straße 20
81543 München (DE)**

(54) **SIGNAL TRANSFER METHOD AND SENDER**

(57) The invention concerns a signal transfer method for the transmission and reception of encoded signals between at least one sender and multiple receivers over a common communication channel, the method comprising the following steps: providing at least two separate streams, namely at least a first stream and a second stream, of information to be encoded and simultaneously transmitted over the channel by the sender, wherein the first stream is for a first receiver and comprises at least one first stream-block ($m_1$) and the second stream is for a second receiver and comprises at least one second stream-block ($m_2$); encoding at least the first stream as a first signal ($u$) and the second stream as a second signal ($v$) and transmitting an addition of the first signal ($u$) with the second signal ($v$) over the channel; wherein: encoding of the first stream (all m1) is delayed with respect to encoding the second stream, wherein at least one first stream-block ($m_1$) of the first stream and at least one second stream-block ($m_2$) of the second stream at least partially time-overlap, which is defined as overlap with respect to time; wherein one second stream-block ($m_2$) of the second stream is encoded to be a second block-code using a first coding method; and after said second stream-block ($m_2$) is encoded, encoding one first stream-block ($m_1$) of the first stream using, at least partially, a dirty-paper-coding method. The invention further concerns a sender (100) configured to perform the signal transfer method.

**Fig. 1**

## Description

The invention concerns a signal transfer method for the transmission and reception of encoded signals between at least one sender and multiple receivers over a common communication channel. The invention further concerns a sender, especially a transceiver, configured to perform the signal transfer method.

## Background of the Invention

Field of the Invention

The invention relates to digital communication systems, in particular wireless networks, which often rely on a shared medium between users. In a wireless downlink scenario, a base station needs to send different data to each user or subscriber. Due to the shared medium, all users receive the full transmissions. This typically requires either the base station to schedule and coordinate with the users or the users to decode all information in a transmission regardless if they are the intended receiver.

Prior Art

In the prior art, there is a multitude of known signal transfer methods for addressing these problems.

For example, from CN101286824B, a pre-coding method and system in MIMO system with multiple users is known. From EP1597883B1, controlled superposition coding in multi-user communication system is known. From EP2149217B1, methods and apparatus for improved utilization of air link resources in a wireless communications system are known. From EP3207656B1, a wireless communication utilizing a unified air interface is known. From EP3244674B1 an asynchronous uplink method, terminal and base station are known. From EP3662597B1 transmission of data by multiple users over shared resources based on structured superposition coding is known. From EP3791688B1, small data transmission with non-orthogonal multiple access is known. From US8626177B2, a method of implementing superposition coding for a forward link in a wireless communication system is known.

Supplementary Background Information

In certain cases, the base station can use linear inverse precoding, so-called space-division multiplex, to separate the data streams for each user. This typically requires a large number of antennas and a suitable geometry of the antenna array and the mobile network. In cases where this is not possible, wireless communications standards instead rely on methods like time-division multiplex, frequency-division multiplex, code-division multiplex, or orthogonal frequency-division multiplex. All of these multiplex methods assign one unique user to each available resource unit, e.g., frequency channel, code book, time slot. This is often called orthogonal signaling. In each resource unit, the respective user knows that the all of the received transmission is for him. This requires active scheduling at the base station as well as coordination between base station and users to communicate this schedule. Except for space-division multiplex if applicable, these methods are typically suboptimal from a data rate per transmit power perspective. In the literature, there exist coding-based non-linear precoding methods which do not perform multiplexing. These schemes allow multiple users per resource unit and can thus increase energy efficiency as one transmission can serve multiple users at the same time. They are often described as non-orthogonal, interference cancelling, or superposition coding.

At the decoder of any user, the code words generated by the encoders for the other users act as interference. For the special case of combining via addition and an additive noise channel, the received symbol is $y = u + v + n$ where $u$ and $v$ are the symbols from the code words of user 1 and 2, respectively, and $n$ is the noise symbol. In other words, for the decoder of user 1, the code word $v$ for user 2 as well as the noise $n$ degrade $u$.

With superposition coding, many users need to decode multiple messages. E.g., if the base station allocates more power to the code word $u$ of user 1, then user 2 needs to decode first the message for user 1 before he can decode his own message. This procedure is called successive cancellation decoding.

Gelfand-Pinsker Coding

With Gelfand-Pinsker (GP) Coding, also known as dirty paper coding (DPC), the encoder for user 1 performs the same operation as for superposition coding. The encoder for user 2, on the other hand, can consider the first code word as known interference. Thus, in the addition example, the second encoder also sees the channel $y = u + v + n$, but this time $u$ is known to the second encoder in advance. At the decoders of either user, only the desired code word needs to be decoded.

In the state of the art, Gelfand-Pinsker coding is only ever considered with interference known for the full code word. As these non-orthogonal strategies rely on coding, they typically operate on whole blocks of symbols.

In particular, for methods resembling Gelfand-Pinsker coding or superposition coding, the transmitter employs distinct encoders for each receiver. The code words generated by these are then combined, e.g., by addition, to one transmit sequence.

In known existing implementations, the code words are of equal length and align with each other when being combined.

For Gelfand-Pinsker coding, it is important for the interference to be known in advance for the whole block. This is required in order to make use of that knowledge optimally.

All of these methods make the (common) assumption that base station and subscribers are synchronized. I.e., decoders know where in their received sequence a code block starts and ends.

Similar problems and solution approaches exist for the uplink, or multiple access, scenario. There, each individual user needs to send data to the base station. For non-orthogonal multiple access, one differentiates between synchronous networks, where it is possible to align each transmitters code word and so-called unsourced random access, where there is no or only minimal synchronization between transmitters. With synchronized transmitters, the code words of each transmitter are typically aligned, similar to the downlink scenario. Additionally, one technique of shifting code words, sometimes referred to as controlled asynchronism, is known, c.f. US8422955B2 and US8442441B2. There, the synchronized transmitters deliberately offsets their code word with respect to the other transmitters' code words. This enables decoding gains at the receiver thanks to improved successive cancellation decoding.

Technical Problem Underlying the Invention

The foregoing described and prior known methods have the following disadvantages.

Implementable information rates of the coding depend on the degree of cooperation between the encoders. With aligned, block-based combination, an encoder either has all the information available for use or none. Therefore, the information rates achievable with this system are limited. Thus, the prior known solutions do not optimally exhaust the Shannon limit for a channel capacity.

**Summary**

It is an object of the present invention to overcome these deficiencies. In particular, it is an object of the present invention to provide a signal transfer method which can achieve high information transfer rates advantageously close to channel capacity.

The solution of these objects is achieved by the subject matter of the independent claim. The dependent claims contain advantageous embodiments of the present invention.

In particular, the solution of these objects is achieved by the signal transfer method according to claim 1. The dependent claims contain advantageous embodiments of the present invention.

The signal transfer method of claim 1 is suited for and adapted to the transmission and reception of encoded signals between at least one sender and multiple receivers over a common communication channel. The method comprises the following steps.

At least two separate streams of information to be encoded are provided. Thereof, at least a first stream and a second stream are provided. These are simultaneously transmitted over the channel by the sender. The first stream is for a first receiver and comprises at least one first stream-block, which is a block of information of the first stream. The second stream is for a second receiver and comprises at least one second stream-block, which is a block of information of the second stream.

The (at least) first stream is encoded as a first signal and the (at least) second stream is encoded as a second signal. Then, an addition of the first signal with the second signal is transmitted over the channel. In other words, the first signal and the second signal are added (functionally for example $g(u,v) = u + v$, but other functional examples of superposition and/or folding are possible) together and then transmitted over the common channel.

In the encoding:
The first stream is delayed with respect to encoding the second stream. Therein, at least one first stream-block of the first stream and at least one second stream-block of the second stream at least partially time-overlap, which is defined as overlap with respect to time. Time-overlap may preferably also be understood as having (at least) portions which are simultaneous in time.

Further therein, one second stream-block of the second stream is encoded to be a second block-code using a first coding method. Further, after said second stream-block is encoded, one first stream-block of the first stream is encoded. Said first stream-block is encoded at least partially using a dirty-paper-coding method. In other words, after the second stream-block is encoded using a first coding method, dirty-paper-coding is at least partially used to encode one first stream-block of the first stream. Therein, the first stream-block is encoded entirely, with at least a portion thereof being encoded using the dirty-paper-coding method.

Thereby, channel capacity is advantageously exhausted by the present signal transfer method.

For the nomenclature, the following is noted. "First stream-block" is a stream-block of the first stream, and "second stream-block" is a stream-block of the second stream. To denote a number or order of blocks, for instance a "first first stream-block" will be referred to, which is the first block out of all first stream-blocks, i.e. the very first block of the first stream, and likewise for the second stream.

Preferably, the term "delayed" above is with respect to a start of encoding. In other words, starting encoding of the first stream is delayed with respect to starting encoding the second stream.

Further preferably, the term "after said second stream-block is encoded" preferably refers to the second stream-block being fully or completely encoded, i.e. can preferably mean "after said second stream-block is entirely encoded" or "after encoding of the second stream-block is finished (entirely)". In this regard, it is noted that blocks, i.e. stream-blocks, are always encoded to code-words in their entirety at once. However, the method or information underlying the encoding of a block may be split, i.e. partially one portion and a remaining portion together encoding one block to a code-block or codeword.

Advantageously, the above referring to "at least two separate streams" is preferably to mean the following. In general, the present signal transfer method is employable in MIMO-systems and methods. In such cases, transmitter, receiver each or both have multiple antennas. Thereby, multiple (for example virtual) streams are generated between one transmitter and one receiver out of the foregoing. These streams can either be parallel or can depend on one another. In the parallel case, Gelfand-Pinsker coding (in the following, either "DPC" or "GP coding" is used interchangeably) is not necessary between streams of separate receivers, and GP coding is employed only on streams of different receivers. In the case that the streams of a receiver are designed with dependencies, GP coding is used between all streams, i.e. between transmitters and receivers as well as between antennas. In any case in which GP Coding is used, the present invention can be employed, i.e. time-shifted GP coding of claim 1.

Furthermore, a communication network with multiple transmitter and receivers is possible. This is commonly referred to as "interference channel". In such cases, in which cooperation between the transmitters is allowed or used, the resulting communication method is similar to GP Coding. The present invention can also be employed towards such cases. Such an example can be for example different encoders per receiver in a base station.

Preferably, in some embodiments, the foregoing described method of encoding one second stream-block of the second stream to be a second block-code using a first coding method and afterwards encoding at least partially one first stream-block of the first stream using DPC can alternate between one another. For example, as will be shown in embodiments below, generally these encoding methods can alternate such that in a next step, another second stream-block of the second stream is encoded (as another, additional second block-code) using dirty-paper-coding method (.e. DPC). This will be referred to herein as "alternating time-shifted GP coding" or "alternating time-shifted DPC".

In particular, in the aforementioned alternating time-shifted DPC according to some embodiments of the invention, particularly only the first (in time) second stream-block of the second stream is encoded using a first coding method (such as a regular point-to-point method as in polar, LDPC, turbo, convolutional, as will be discussed below). Afterwards, there is always at least partial time-overlap. Thus, afterwards, for each code-word from each stream DPC can be used for each receiver. In other words, the encoding using a first coding method for the very first second stream-block of the second stream is done due to being in time before the very first first stream-block (i.e. the first block of all the first stream-blocks, i.e. the first of all blocks of the first stream), where conventional DPC is not possible. Once having encoded the very first second stream-block using the first coding method, it is possible to generate and use side-information for DPC for all further encoding. In other words, the first coding method is preferably used as an initialization of encoding the first stream and the second stream, which are time-shifted against one another, i.e. delayed.

Of course, the code-words for the first stream can be encoded using a different method than the code-words for the second stream. Further preferably, the first code-word from the first stream can be encoded with a different DPC method than the DPC method for encoding the second code-word of the second stream.

In some embodiments, during the at least partial DPC of the first stream-block of the first stream, information of the second block-code is used as a primary side-information for the at least partial dirty-paper-coding of the first stream-block of the first stream. In other words, DPC commonly employs side-information for encoding.

In a preferable embodiment, the time-overlapping portion of the second block-code of the second stream-block is used as the primary side-information for the DPC of the first stream-block. Thus, the first stream-block can be encoded via DPC using side-information of the already-encoded (first coding method) first second stream-block.

Preferably, during the at least partial DPC of the first stream-block of the first stream, the first stream-block is encoded only partially, especially not completely, using the partial DPC method. In particular, it should be noted that blocks are always encoded entirely simultaneously, i.e. blocks are encoded and generated at once. In this embodiment, however, the DPC method is only used for a partial portion of the block. In particular, the DPC method using the side-information of the already-encoded first second stream-block is only used for partial encoding via DPC of the first stream-block of the first stream, and different or other side-information is used for another part or portion thereof. In some exemplary cases, another DPC method is used for the another part or portion thereof.

In such a case, preferably, a remaining part of the first stream-block may be encoded using the DPC method with auxiliary side-information. The auxiliary side-information is preferably different side-information with respect to the primary side-information. In other words, for one portion of DPC encoding the first stream-block, the primary side-information is used, and for another (at least one further) portion of DPC encoding the first stream-block, auxiliary side-information is used. Herein, encoding of partial DPC and remaining part, with primary and auxiliary side-information, are carried out at the same time since it is a single code word.

For example, the auxiliary side-information comprises a probability distribution dependent on the second stream. Preferably, the probability distribution is for example one out of $P(u|v)$, $P(u|v)$, $P(u,v)$, $P(u)$, and $P(v)$, with u being a code word of the (encoded) first stream and v being a code word of the (encoded) second stream, i.e. the first signal and second signal.

In further examples, primary and/or auxiliary side-information may include for example:

- channel state information from uplink/downlink reciprocity, channel estimation, and pilot symbols;

- channel state information reported back to the transmitter by the receiver;

- channel state information and/or known transmit sequences from other network cells in the case of cooperating base stations and/or cloud random access networks (C-RAN);

- side-information in the form of higher-layer feedback ,e.g., from ARQ (automatic repeat request).

Preferably, the first coding method is point-to-point coding. Examples thereof are for example polar-coding and/or Low-Density-Parity-Check-coding (LDPC).

In preferable embodiments, the DPC is polar code-based DPC and/or lattice-based DPC and/or Costa precoding and/or Tomlinson-Harashima precoding and/or Vector-perturbation by Hochwald. The foregoing listed coding methods, i.e. the first coding method examples and the DPC examples are conventionally well-known to the skilled person and will thus not be explained in detail.

Preferably, the first stream and the second stream are respectively bit streams.

Further preferably, in some embodiments, a bit-size respectively of the at least one first stream-block of the first stream and of the at least one second stream-block of the second stream are the same. Preferably, all blocks of all streams are of the same sizes.

In one embodiment, preferably, the encoding of the first stream and the second stream is delayed such that the partial overlap is 50%. In other words, the entire first second stream-block of the second stream is encoded to be the second block-code (the first in time) using the first coding method, and afterwards, the first first stream-block of the first stream is encoded to 50% using the DPC method, particularly using the side-information of 50% of the second block-code already encoded (as an initialization). The second half of the first first stream-block is preferably encoded using the auxiliary side-information and DPC method. Then, afterwards, the second second stream-block is encoded based on DPC and using the foregoing second half of the first first stream-block as side-information, and so on. This time-shifted alternating encoding can then be repeated until the end of the streams is reached. On the other hand, in general, the present method is not limited to aforementioned 50%, and it is an advantage of the invention in that the amount of partial overlap is easily adaptable, especially over commonly known GP coding with Time-Sharing.

The invention furthermore concerns a sender, especially a transceiver, comprising a control unit configured to perform the signal transfer method according to any one or a combination of the above embodiments.

The foregoing described preferable embodiments and configurations may be combined.

Further details, advantages, and features of the preferred embodiments of the present invention are described in detail with reference to the figures. Therein:

**Brief Description of the Drawings**

Fig. 1 shows a diagram illustrating an embodiment of a signal transfer method according to the present invention; and

Fig. 2 shows a transceiver according to the present invention.

**Description of the Embodiments**

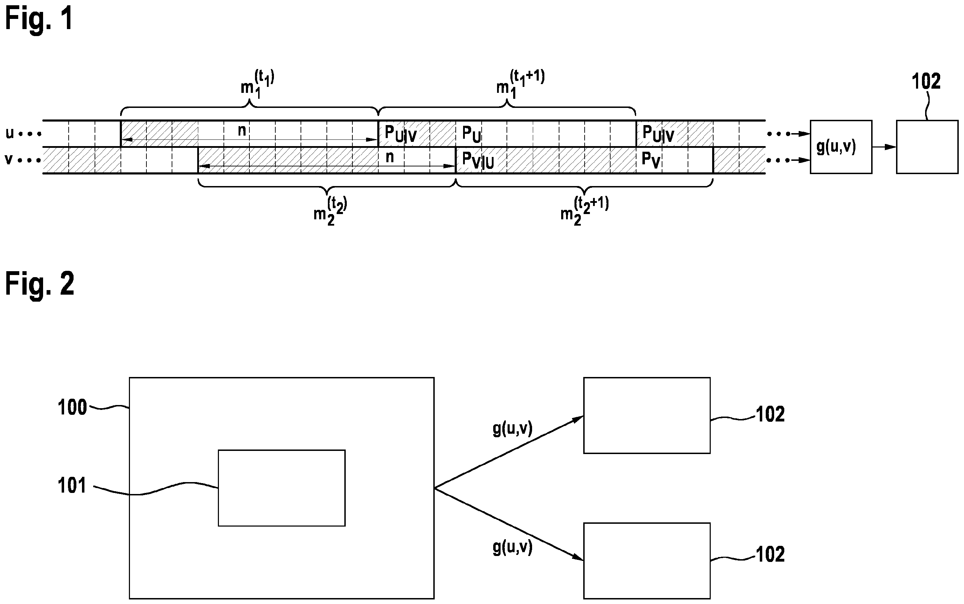

An embodiment of the present invention will be described with reference to Fig. 1.

Therein, Fig. 1 shows a diagram illustrating the embodiment of a signal transfer method according to the present invention. In particular, shown in Fig. 1 is a diagram of encoding signals u, v respectively over time, with positive time advancement shown from left to right in Fig. 1.

The signal transfer method is for the transmission and reception of encoded signals between at least one sender, for example a transceiver 100 (see also Fig. 2), and multiple receivers 102 over a common communication channel. The sender may for example be a base station, and the multiple receivers 102 may for example be mobile phones.

Herein, as an example, two receivers 102 each receive one signal u, v. In other words, in the present signal transfer method, two separate streams are provided, namely a first stream and a second stream of information to be encoded and simultaneously transmitted over the channel by the sender. The first stream is for a first receiver 102 and comprises at least one first stream-block, denoted $m_1$. The second stream is for a second receiver 102 and comprises at least second stream-block, denoted $m_2$.

In Fig.1, the stream-blocks respectively have an index $m_x$, x being 1 or 2, denoting their correspondence to the first or second stream. Furthermore, they have an additional index $m^t$, denoting their enumeration in time (for example, $m^{(t1+1)}$ follows $m^{(t1)}$). The first and second stream-blocks $m_1$, $m_2$ each and all comprise a bit-length of n bits.

As can be taken from Fig. 1, the first stream, comprising all first stream-blocks $m_1$ is encoded as a first signal u. The second stream, comprising all second stream-blocks $m_2$, is encoded as a second signal v. It is emphasized that in the illustration of Fig. 1, the streams shown in the figure are not streams of messages $m_x$, i.e. are not stream-blocks, but represent streams of encoded code words (code-blocks), which form the signals u and v.

Herein, the first signal u and the second signal v are added together to g(u,v) and transmitted simultaneously over the channel.

For illustration in Fig. 1, the stream-blocks $m_1$, $m_2$ respectively are shown as separated by through-lines (versus further stream-blocks $m_1$, $m_2$), whereas individual bits n of each stream-block $m_1$, $m_2$ are shown separated in dashed lines.

As can be taken from Fig. 1, during the encoding of the present method, encoding of the first stream of all stream-blocks $m_1$ is delayed with respect to encoding the second stream of all second stream-blocks $m_2$. As shown by the hashed individual bits, the first stream is delayed such that at least one, in the present embodiment all, first stream-block $m_1$ and second stream-block $m_2$ partially time-overlap, which is defined as overlap with respect to time.

In the present embodiment, three (or correspondingly n-3) bits of each of the first stream-block $m_1$ and the second stream-block $m_2$ overlap with each other. However, this is merely to be understood as a visualization. In common real-world implementations, n may range between orders of magnitudes of 100 to 10000, with a size of the overlap also in these orders of magnitude.

Further in the encoding, starting illustratively on the left of Fig. 1 with the first fully shown stream-blocks $m_1$, $m_2$ (i.e. $m_1(t1)$, $m_2(t2)$), the first second stream-block $m_2(t2)$ is encoded using a first coding method, which in the present embodiment is a point-to-point encoding method such as polar coding, so as to generate a second block-code. The second block-code is a codeword of the second signal v to be sent to and received/decoded by a receiver.

Then, after this second stream-block $m_2(t2)$ is encoded as the second block-code, the first stream-block $m_1(t1+1)$ is partially encoded using a dirty-paper-coding method, i.e. DPC, also referred to as Gelfand-Pinsker coding (GP coding). Therein, the time-overlapping bits of the second stream-block $m_2(t2)$, which are shown hashed, are used as side-information for the partial DPC. This side-information resulting from the overlapping bits will also be referred to as "primary side-information".

As shown in Fig. 1, the primary side-information in the present embodiment is Pulv, which is a probability distribution for first signal u given a certain second signal v. This is known to the sender and included as primary side-information.

Since the overlap, as shown by the hashed bits, is only partial in the present embodiment, the first stream-block $m_1(t1+1)$ is encoded only partially using said dirty-paper-coding method with the primary side-information. The remaining part (i.e. n-3 of $m_1(t1+1)$) is encoded using a dirty-paper-coding method with auxiliary side-information which is different from the primary side-information. In the present embodiment, the auxiliary side-information is Pu, which is a probability distribution for u. In other words, the remaining part of the first stream-block $m_1$ (t1+1) is encoded so as to follow the probability distribution Pu, known to the sender, for the first signal u. This probability distribution Pu can be calculated for example based on aforementioned Pulv of the first three (overlapping, hashed) bits with the given v of $m_2(t2)$.

Thereby, the first second stream-block $m_2(t2)$ is encoded using point-to-point coding, and the (in this explanation) first first stream-block $m_1(t1+1)$ is encoded using DPC or GP coding based on information on the first second stream-block $m_2(t2)$.

Of course, as demonstrated in Fig. 1, since the present embodiment concerns streams of information, particularly bit-streams, these described stream-blocks $m_1$, $m_2$ can be at the beginning, the end, or anywhere in between within the first stream and the second stream.

In the present invention, it is advantageous if the foregoing described encoding of the first stream-block $m_1$ and of the second stream-block $m_2$ is carried out with the very first corresponding blocks of the first stream and of the second stream. In other words, preferably, the very first second stream-block is $m_2(t2)$ and is encoded using point-to-point encoding as an initialization, and then the very first first stream-block is $m_1(t1+1)$ is encoded using DPC based on side-information on the very first second stream-block $m_2(t2)$.

In the present embodiment, after the aforementioned encoding of the first stream-block $m_1(t1+1)$, the second second stream-block $m_2(t2+1)$ is encoded. Herein, the second second stream-block $m_2(t2+1)$ is encoded using the DPC method. Further herein, side-information used for this encoding with DPC method is partially Pv|u, which is also known to the sender, and is based on the code-word of $m_1(t1+1)$, i.e. the overlap therewith (non-hashed bits n of $m_1(t1+1)$). The remaining portion of the second second stream-block $m_2(t2+1)$ is encoded using DPC method with Pv as side-information, which can be calculated based on Pv|u and given u.

This alternating, after initialization with point-to-point coding of the first very second stream-block $m_2(t2)$ is herein referred to as "time-shifted alternating Gelfand-Pinsker" encoding. This is repeated until the first stream comprising all first stream-blocks m1 and the second stream comprising all second stream-blocks $m_2$ are encoded. Then, these are added, for example functionally with g(u,v) = u + v, or via another superposition or folding function, and transmitted via the common channel to both receivers 102.

Thereby, this signal transfer method achieves high information transfer rates advantageously close to channel capacity.

Fig. 2 shows a transceiver 100 according to the present invention. The transceiver 100 comprises a control unit 101 configured to perform the foregoing described signal transfer method. The control unit 101 may be connected to one or more antennas and/or other shared medium such as (multi-mode) optical fiber networks, underwater acoustic communication, powerline communication, etc. (not shown). The transceiver 100, via the control unit 101, transmits the encoded and added signal g(u,v) = u + v to multiple receivers 102.

In addition to the foregoing written explanations, it is explicitly referred to figure 1, wherein the figure in detail shows the embodiment of the signal transfer method of the invention. Furthermore, the following background and invention information is referred to (copyright & source indication: "Time-Shifted Alternating Gelfand-Pinsker Coding for Broadcast Channels" Constantin Runge, Gerhard Kramer 2024 IEEE International Symposium on Information Theory (ISIT)):

## I. INTRODUCTION

Broadcast channels (BCs) model the downlink of wireless cellular systems. A practical approach to avoid interference is orthogonalizing transmission, e.g., by time-division multiplexing, frequency-division multiplexing, or inverse precoding. The best-known rates for BCs, up to multi-letter coding that is considered impractical, are achieved with Marton coding which simultaneously bins two or more random codebooks; see [1, p. 259], [2], [3]. However, Marton coding also seems impractical, and implementations use binning with individual codebooks, called Gelfand-Pinsker (GP) coding [4]. Capacity-achieving GP coding can be implemented by polar codes [5] for joint shaping and error control [6]. For example, the authors of [7] apply polar codes to binary symmetric GP channels; the paper [8] polarizes two random variables concurrently; the paper [9] uses polar codes for probabilistic shaping and GP coding; the authors of [10] use a chaining construction; the thesis [11] uses polar lattices; and the papers [12], [13], [14] use scalar lattices and probabilistic shaping.

GP coding for BCs achieves the corner points of Marton's region. The other rate points may be achieved by time-sharing or rate-splitting [15], similar to multi-access channels (MACs) with successive cancellation (SC) decoding. For MACs, a simple scheme has the transmitters use time-shifted encoding [16] and SC decoding. This approach has a lower delay than time-sharing in general and is simpler than rate-splitting. A related idea is block-offset encoding and SC decoding, which can improve rates, e.g., for multi-access relay channels [17] and noisy network coding [18], [19].

This paper studies a dual of the MAC scheme in [16], which we call time-shifted alternating (TSA) GP encoding. Simulations suggest that polar codes are well-suited for the approach. The paper is organized as follows. Section II reviews notation, Marton's region, and GP coding. Section III performs TSA-GP encoding using random codes, and Section IV uses polar codes. Section V concludes the paper.

## II. PRELIMINARIES

### A. Notation

Random variables are written in upper case, such as $X$. The alphabet, distribution, and realization of $X$ are written as $\mathcal{X}$, $P_X$ and x, respectively. If $P_{Y_1|X}$ is stochastically degraded with respect to $P_{Y_2|X}$ we write $P_{Y_1|X} \preceq P_{Y_2|X}$. An index set is denoted by $[n] := \{1,\ldots,n\}$. Strings $(x_1,\ldots,x_n)$ of symbols are denoted as $x^n$. String concatenation is denoted as $[a^m, b^n]$ and $g^n(x^n) := (g(x_1),\ldots,g(x_n))$.

The expressions $\mathbb{E}[X]$, $\mathbb{H}(X)$, $\mathbb{H}(X|Y)$, and $\mathbb{I}(X;Y)$ refer to the expectation of $X$, the entropy of $X$, the conditional entropy of $X$ given $Y$, and the mutual information (MI) of $X$ and $Y$, respectively. The binary entropy function is denoted $h_2(p) = -p\log_2 p - (1 - p)\log_2(1 - p)$ for $0 < p < 1$, and $h_2(0) = h_2(1) = 0$. The conditional Bhattacharyya parameter is defined as (see [20])

$$Z(X|Y) = 2\mathbb{E}\left[\sqrt{P_{X|Y}(0|Y)P_{X|Y}(1|Y)}\right] \qquad (1)$$

and satisfies (see [20], [21, Lemma 6])

$$Z(X|Y)^2 \le \mathbb{H}(X|Y) \le Z(X|Y) \qquad (2)$$

$$Z(X|Y,S) \le Z(X|Y) \qquad (3)$$

where $X, Y, S \sim P_{XYS}$. The string $x^n$ is said to be $\varepsilon$-typical with respect to $P_X$ if

$$|N(a|x^n)/n - P_X(a)| \le \epsilon P_X(a),$$

for all $a \in \mathcal{X}$ where $N(a|x^n)$ is the number of times the letter a occurs in the string $x^n$. The set of length-$n$ $\varepsilon$-typical strings with respect to $P_X$ is denoted as $\mathcal{T}_\epsilon^n(P_X)$. We write $P_X^n = (P_X)^n$ for independent and identically distributed (i.i.d.) strings.

*B. BCs*

A two-receiver discrete memoryless BC [22] has a conditional distribution $P_{Y_1Y_2|X}$ with input $X$ and two outputs $Y_1$, $Y_2$. An $(n, R_1, R_2)$ code is a triple consisting of one encoder and two decoders where the encoder maps a message pair $(m_1, m_2) \in [\![2^{nR_1}]\!] \times [\![2^{nR_2}]\!]$ to a transmit string $x^n$ and each decoder $k \in \{1, 2\}$ maps its channel observation $y_k^n \in \mathcal{Y}_k^n$ to an estimate $\hat{m}_k \in [\![2^{nR_k}]\!]$. Marton's region of rate pairs $(R_1, R_2)$ for a fixed $P_{UVX}$ is (see [3], [23] and also [24])

$$R_1 \le \mathbb{I}(U;Y_1), \quad R_2 \le \mathbb{I}(V;Y_2), \qquad (4)$$

$$R_1 + R_2 \le \mathbb{I}(U;Y_1) + \mathbb{I}(V;Y_2) - \mathbb{I}(U;V) \qquad (5)$$

Figure 2. TSA-GP coding. The yellow region signifies GP encoding, and the white region point-to-point encoding.

where $U, V$ are auxiliary random variables and the chain $(U, V) - X - (Y_1, Y_2)$ is Markov. It suffices to choose $X = g(U, V)$ for some function $g : \mathcal{U} \times \mathcal{V} \to \mathcal{X}$.

*C. Achievability via GP Coding*

The interesting corner points of (4)-(5) are

$$(R_1, R_2) = (\mathbb{I}(U,Y_1), \mathbb{I}(V;Y_2) - \mathbb{I}(V;U)) \qquad (6)$$

$$(R_1, R_2) = (\mathbb{I}(U; Y_1) - \mathbb{I}(U; V), \mathbb{I}(V; Y_2)). \qquad (7)$$

Fig. 1 shows the capacity region of the Blackwell channel [25], which can be achieved with GP encoding; see [3], [26]. For the corner point (6), $m_1$ is encoded to $u^n$ with a usual encoder for the channel $P_{Y_1|U}$. Next, $u^n$ is interpreted as side-information available at the encoder, and $m_2$ is encoded to $v^n$ using GP coding for the channel $P_{Y_2|U,V}$ with state $U$. Finally, the symbols $x_i = g(u_i, v_i)$, $i \in [n]$, are transmitted. The corner point (7) is achieved by swapping the roles of messages 1 and 2.

Time-sharing can achieve any point in Marton's region by transmitting at each corner point for some fraction of the time. However, if the reliability constraints require similar code word lengths for both receivers, the delay is approximately a multiple of the code word lengths. This makes time-sharing impractical for low-delay transmissions. On the other hand, rate-splitting splits one message into two messages and treats the BC as a three-receiver channel, which incurs additional complexity for code design and at the encoder and decoders.

## III. TSA ENCODING WITH RANDOM CODES

Time-sharing has each code word generated by a usual encoder or a GP encoder. TSA coding instead introduces an offset between the receiver blocks. The encoders for each receiver perform GP encoding in the first part of their blocks, where the interference of the other receiver's codeword is known, and a usual encoding in the second part; see Fig. 2.

Again, two encoders produce $u^n$ and $v^n$. Let $n_1 < n$ be the shift of the blocks of receiver 2. Then, when $m_1$ is encoded, the last $n_1$ symbols of the previous $v^n$ overlap with the first $n_1$ symbols of the $u^n$ to be encoded. The encoder for receiver 1 assumes the first $n_1$ states are known and treats the remaining $n - n_1$ states as unknown. Similarly, the encoder for receiver 2 assumes the first $n - n_1$ states are known and treats the remaining $n_1$ states as unknown.

Figure 1. Capacity region of the Blackwell channel [25]. The blue and yellow regions are achievable with conventional GP coding, each corresponding to one encoding order.

**Theorem 1.** *TSA-GP encoding achieves all rate points in Marton's region.*

*Proof.* For the BC $P_{Y_1 Y_2|X}$ fix the distribution $P_{UV}$, a function $g: \mathcal{U} \times \mathcal{V} \to \mathcal{X}$, as well as overlap lengths $0 \leq n_1 \leq n$ and $n_2 = n - n_1$. We transmit messages $m_1 \in [2^{nR_1}]$, $m_2 \in [2^{nR_2}]$ to receivers 1 and 2, respectively. For $n_1 = 0$ or $n_2 = 0$, TSA coding is identical to GP coding for the corner points. We assume $n_1, n_2 > 0$ in the following.

*Code Construction:* For receiver 1, choose $2^{nR_1 + n_1 R_1'}$ i.i.d. code words $u^{n_1}(m_1, l_1)$, $l_1 \in [2^{n_1 R_1'}]$, with $P_U^{n_1}$ and $2^{nR_1}$ i.i.d. $u^{n_2}(m_1)$ with $P_U^{n_2}$. For receiver 2, choose $2^{nR_2 + n_2 R_2'}$ i.i.d. $v^{n_2}(m_2, l_2)$, $l_2 \in [2^{n_2 R_2'}]$, with $P_V^{n_2}$ and $2^{nR_2}$

i.i.d. $v^{n_1}(m_2)$ with $P_V^{n_1}$.

*Encoding:* The encoder maps $m_1, m_2$ to pairs $(u^{n_1}, u^{n_2})$, $(v^{n_2}, v^{n_1})$, respectively, in an alternating manner. Given a previous $m_2$ and a current $m_1$, the encoder chooses an $l_1$ such that $(u^{n_1}(m_1, l_1), v^{n_1}(m_2)) \in \mathcal{T}_\epsilon^{n_1}(P_{UV})$ and transmits $x^{n_1}$ = $g^{n_1}(u^{n_1}(m_1, l_1), v^{n_1}(m_2))$. Similarly, given a previous $m_1$ and a current $m_2$, the roles are reversed, i.e., the encoder

chooses a $l_2$ such that $(u^{n_2}(m_1), v^{n_2}(m_2, l_2)) \in \mathcal{T}_\epsilon^{n_2}(P_{UV})$ and transmits $x^{n_2} = g^{n_2}(u^{n_2}(m_1), v^{n_2}(m_2, l_2))$. In both cases, if there is no jointly typical string, set $l_k = 1$, $k = 1, 2$.

*Decoding:* Given $y_1^n = [y_1^{n_1}, y_1^{n_2}]$, receiver 1 finds indices $\hat{m}_1, \hat{l}_1$ such that $(u^{n_1}(\hat{m}_1, \hat{l}_1), y_1^{n_1}) \in \mathcal{T}_\epsilon^{n_1}(P_{UY})$ and $(u^{n_2}(\hat{m}_1), y_1^{n_2}) \in \mathcal{T}_\epsilon^{n_2}(P_{UY})$. Receiver 2 proceeds analogously with $y_2^n = [y_2^{n_2}, y_2^{n_1}]$.

*Analysis:* The encoder uses standard GP encoders, which are likely to succeed if $R_k' > \mathbb{I}(U; V)$ and $n_k$ is large for $k = 1, 2$. Suppose $(u^{n_1}, v^{n_1}, y_1^{n_1}) \in \mathcal{T}_\epsilon^{n_1}(P_{UVY_1})$ and consider the event $\varepsilon_1$ of finding wrong estimates $\hat{m}_1, \hat{l}_1$. We have

$$\Pr(\mathcal{E}_1) = \sum_{\substack{\hat{m}, \hat{l} \\ \hat{m} \neq m_1}} \Pr(\mathcal{E}_{\mathrm{GP}}^1(\hat{m}, \hat{l})) \Pr(\mathcal{E}_{\mathrm{direct}}^1(\hat{m})) \qquad (8)$$

$$\leq \sum_{\substack{\hat{m}, \hat{l} \\ \hat{m} \neq m_1}} 2^{-(n_1 \mathbb{I}(U; Y_1) + n_2 \mathbb{I}(U; Y_1)) + \delta_1(\epsilon)} \qquad (9)$$

$$\leq 2^{n(R_1 + \frac{n_1}{n} R_1' - \mathbb{I}(U; Y_1)) + \delta_1(\epsilon)} \qquad (10)$$

where the events $\mathcal{E}_{\mathrm{GP}}^1(m, l) = \{(u^{n_1}(m, l), y_1^{n_1}) \in \mathcal{T}_\epsilon^{n_1}(P_{UY_1})\}$ and $\mathcal{E}_{\mathrm{direct}}^1(m) = \{(u^{n_2}(m), y_1^{n_2}) \in \mathcal{T}_\epsilon^{n_2}(P_{UY_1})\}$ are independent, and $\lim_{\varepsilon \to 0} \delta_1(\epsilon) = 0$. For the event $\varepsilon_2$ of finding erroneous indices at receiver 2, we similarly have

$$\Pr(\mathcal{E}_2) \leq 2^{n(R_2 + \frac{n_2}{n} R_2' - \mathbb{I}(V; Y_2)) + \delta_2(\epsilon)}. \qquad (11)$$

Defining $\alpha := \frac{n_1}{n}$ and combining our results we obtain an achievable region of

$$R_1 < \mathbb{I}(U; Y_1) - \alpha \mathbb{I}(U; V) \qquad (12)$$

$$R_2 < \mathbb{I}(V; Y_2) - (1 - \alpha) \mathbb{I}(U; V) \qquad (13)$$

with

$$R_1 + R_2 < \mathbb{I}(U; Y_1) + \mathbb{I}(V; Y_2) - \mathbb{I}(U; V). \qquad \square$$

The above scheme requires no time-sharing or rate-splitting, and few blocks are needed to approach a desired rate tuple. For example, consider the target fraction $\alpha^* = a/N$ where $a$ and $N$ are integers. With time-sharing, the average rates are close to the desired rate tuple only if the number of blocks is a multiple of $N$ or significantly larger than $N$. Thus, the number of data bits for receiver $k$ with time-sharing is a multiple of $N \cdot nR_k$. On the other hand, TSA coding requires $N$ to be a divisor of the block length $n$, i.e., the number of data bits is a multiple of $nR_k$, without the extra factor $N$. This difference is important for large $N$, e.g., when a fine-grained control of data rates is needed. If $N$ does not divide $n$, then $\alpha^*$ can be closely approximated by some fraction $\frac{n_1}{n}$ for most practical block lengths. Also, time-sharing and rate-splitting require multiple rates for different blocks, while the TSA rates are the same for each block which simplifies coding.

## IV. TSA ENCODING WITH POLAR CODES

We demonstrate the practicality of TSA coding via polar codes. Polar codes achieve the corner points of Marton's region using the schemes from [9], [10]. TSA polar encoding modifies these schemes.

*A. Polar Codes*

Polar codes are linear block codes defined via the self-inverse, linear polar transform $G_n$ with

$$\bar{x}^n = x^n G_n^{-1}, \quad G_n = \begin{bmatrix} 1 & 0 \\ 1 & 1 \end{bmatrix}^{\otimes \log_2 n} \quad (14)$$

where $F^{\otimes k}$ is the $k$-fold Kronecker product of $F$. For strings $X^n$ and $Y^n$ we introduce the notation

$$\mathcal{L}_{X|Y} \triangleq \{i \in [\![n]\!] \mid Z(\bar{X}_i|\bar{X}^{i-1}, Y^n) < \delta_n\} \quad (15)$$

$$\mathcal{H}_{X|Y} \triangleq \{i \in [\![n]\!] \mid Z(\bar{X}_i|\bar{X}^{i-1}, Y^n) > 1 - \delta_n\} \quad (16)$$

for sets of strongly polarized positions and

$$\mathcal{L}'_{X|Y} \triangleq \{i \in [\![n]\!] \mid Z(\bar{X}_i|\bar{X}^{i-1}, Y^n) \leq 1 - \delta_n\} \quad (17)$$

$$\mathcal{H}'_{X|Y} \triangleq \{i \in [\![n]\!] \mid Z(\bar{X}_i|\bar{X}^{i-1}, Y^n) \geq \delta_n\} \quad (18)$$

for sets of strongly or weakly polarized positions where $\bar{X}^n = X^n G_n^{-1}$ is the polar transform of $X^n$ and $\delta_n = 2^{-n^\beta}$ for $0 < \beta < \frac{1}{2}$. These index sets polarize [6, Eqs. (38), (39)], i.e., we have

$$\lim_{n \to \infty} \frac{1}{n} |\mathcal{L}_{X|Y}| = \lim_{n \to \infty} \frac{1}{n} |\mathcal{L}'_{X|Y}| = 1 - \mathbb{H}(X|Y) \quad (19)$$

$$\lim_{n \to \infty} \frac{1}{n} |\mathcal{H}_{X|Y}| = \lim_{n \to \infty} \frac{1}{n} |\mathcal{H}'_{X|Y}| = \mathbb{H}(X|Y). \quad (20)$$

One usually has $X^n \sim \mathrm{Ber}^n(\frac{1}{2})$ for polar codes.

This polarization property can be used for coding by considering the polar transform $\bar{x}^n$ of the code word $x^n$ as follows. The bits $\bar{x}_i$ on positions $i \in \mathcal{L}_{X|Y}$, can be estimated reliably given previous $\bar{x}_j$, $j \in [\![i-1]\!]$. An encoder thus places data into the positions in $\mathcal{L}_{X|Y}$. The remaining, so-called frozen, bits $\bar{x}_i$, $i \in \mathcal{H}'_{X|Y}$, are fixed to 0. An SC decoder successively computes estimates of $\bar{x}_i$ given $y^n$: at every position $i$, either $\bar{x}_i = 0$ is known, or $\bar{x}_i$ can be estimated reliably. The error probability of the entire decoding procedure goes to 0 as $\mathcal{O}(2^{-n^\beta})$ for $0 < \beta < \frac{1}{2}$.

*B. Polar Codes for Probabilistic Shaping and GP Coding*

The polar transform can be used to construct codes that emulate a distribution $P_{X^n} = \Pi_i P_{X_i}$ [6]. Consider, e.g., the i.i.d. case $P_{X^n Y^n} = P_X^n P_{Y|X}^n$. We analyze $Z(\bar{X}_i|\bar{X}^{i-1}, Y^n)$ and $Z(\bar{X}_i|\bar{X}^{i-1})$. The bits $\bar{x}_i$ with $i \in \mathcal{H}_X$ have entropy close to 1 and can carry one bit of information each. The shaping bits $\bar{x}_i$ with $i \in \mathcal{L}'_X$, have entropy mostly significantly less than 1. This means $X^n \sim P_{X^n}$ induces a non-uniform distribution on these bits given $\bar{x}^{i-1}$. Encoding is performed by first fixing $\bar{x}_i = 0$, $i \in \mathcal{H}'_{X|Y}$, and placing data into $\bar{x}_i$, $i \in \mathcal{M}$, with $\mathcal{M} = \mathcal{L}_{X|Y} \cap \mathcal{H}_X$. An SC decoder then computes probabilities and samples $\bar{x}_i \sim P_{\bar{X}_i|\bar{X}^{i-1}}$, $i \in \mathcal{L}'_X$. The receiver is similar to the one for polar codes with uniform $X$. The bits with $i \in \mathcal{H}_X$ are estimated using an SC decoder given $y^n$. The bits at $\mathcal{L}'_X$ must be decoded with the same SC decoder and randomness as at the encoder. Since $\mathcal{L}_X \subseteq \mathcal{L}_{X|Y}$, the rate is [6]

$$\lim_{n \to \infty} \frac{1}{n} |\mathcal{M}| = \mathbb{H}(X) - \mathbb{H}(X|Y) \qquad (21)$$

and the decoding error probability scales as $\mathcal{O}\ (2^{-n^\beta})$.

The above carries over to GP coding with polar codes when a state $S^n$ is known at the encoder. Assuming $P_{S|X} \preceq P_{Y|X}$, one can show that $\mathcal{L}_{X|S} \subseteq \mathcal{L}_{X|Y}$ [7]. The index sets $\mathcal{H}_{X|S}$ and $\mathcal{L}_{X|Y}$ thus align, and the coding scheme for probabilistic shaping can be applied by simply considering $X|S$ and $X|Y$ instead of $X$ and $X|Y$ [7], [6], [9]. This degradedness assumption can be lifted using the chaining methods of [7], [10]. An error probability scaling of $\mathcal{O}\ (2^{-n^\beta})$ is achieved with the message set $\mathcal{M} = \mathcal{H}_{X|S} \cap \mathcal{L}_{X|Y}$ and the rate

$$\lim_{n \to \infty} \frac{1}{n} |\mathcal{M}| = \mathbb{H}(X|S) - \mathbb{H}(X|Y). \qquad (22)$$

For simplicity, we assume $P_{S|X} \preceq P_{Y|X}$.

*C. Proof of Polarization for TSA Coding*

Polar codes achieve the corner points of Marton's region if $P_{U|V} \preceq P_{Y_2|V}$ [9, Thm. 3]. The scheme splits the target distribution $P_{UV}$ into $P_U P_{V|U}$ and performs shaping with frozen bits $\mathcal{H}'_{U|Y_1}$ and shaping bits $\mathcal{L}'_U$ for receiver 1, and then polar GP coding with frozen bits $\mathcal{H}'_{V|Y_2}$ and shaping bits $\mathcal{L}'_{V|U}$ for receiver 2. As outlined above, this scheme achieves the GP points with the message sets $\mathcal{M}_1 = \mathcal{L}_{U|Y_1} \cap \mathcal{H}_U$ and $\mathcal{M}_2 = \mathcal{L}_{V|Y_2} \cap \mathcal{H}_{V|U}$, i.e., we have

$$\lim_{n \to \infty} \frac{1}{n} |\mathcal{M}_1| = \mathbb{I}(U; Y_1) \qquad (23)$$

$$\lim_{n \to \infty} \frac{1}{n} |\mathcal{M}_2| = \mathbb{I}(V; Y_2) - \mathbb{I}(U; V). \qquad (24)$$

Using this polarization property, one can prove vanishing error probabilities of a coding scheme with shared randomness.

One hurdle to proving polarization for the TSA-GP scheme is that the strings of binary-input discrete memoryless channels (biDMCs) to be transformed are not stationary and depend on the block length $n$. We cannot identify the transformed channels after the same number of transformations for different $n$ with each other. Instead, we prove polarization for an ensemble of polar codes concatenated with a uniform random block interleaver of length $n$. This interleaver allows to treat the non-stationary sequence as stationary and i.i.d. when considering its polar transform. We can model the interleaver as randomly assigning GP encoding or point-to-point encoding to each position $i \in [n]$.

**Theorem 2.** *Consider a biDMC $P_{Y|UV}$ with channel input $U$ and random state $V$. For each block of length n, the partial state $v^{n_1}$ is known to the transmitter at positions* $\mathcal{A} \subset [n]$, $|\mathcal{A}| = n_1$. *If the positions $\mathcal{A}$ are chosen uniformly at random for each code block, then there exist polar encoders and decoders with rate approaching* $\mathbb{I}(U; Y) - \alpha \mathbb{I}(U; V)$ *and error probability approaching 0 as* $\mathcal{O}\ (2^{-n^\beta})$, $0 < \beta < \frac{1}{2}$. *Proof. Consider V, S, U, Y $\sim P_V P_S P_{U|VS} P_{Y|UV}$ where S takes on the value 1 if $i \in \mathcal{A}$ and 0 otherwise. Let $P_S = \mathrm{Ber}(\alpha)$,* $P_{U|VS}(u|v, 0) = \mathbb{E}[P_{U|V}(u|V)] = P_U(u)$ *and $P_{U|VS}(u|v, 1) = P_{U|V}(u|v)$. To show polarization, define a random variable V' with alphabet $\mathcal{V}' = \mathcal{V} \cup \{\perp\}$ where $\perp \notin \mathcal{V}$ as $v' : \mathcal{V} \times \mathcal{S} \to \mathcal{V}'$, $(v, 1) \mapsto v$, $(v, 0) \mapsto \perp$. The models $P_V P_S P_{U|VS} P_{Y|UV}$ and $P_V P_S P_{V'|VS} P_{U|V'} P_{Y|UV}$ yield identical joint distributions for V, S, U, Y when $P_{U|V'}(u|v) = P_{U|V}(u|v)$, $v \in \mathcal{V}$, and $P_{U|V'}(u|\perp) = P_U(u)$. We have*

$$\lim_{n \to \infty} |\mathcal{L}_{U|Y}| = 1 - \mathbb{H}(U|Y) \qquad (25)$$

$$\lim_{n \to \infty} |\mathcal{H}_{U|V'}| = \alpha \, \mathbb{H}(U|V) + (1 - \alpha) \, \mathbb{H}(U) \qquad (26)$$

and thus

$$\frac{1}{n}|\mathcal{M}| \to (1 - \alpha) \, \mathbb{I}(U;Y) + \alpha \, (\mathbb{I}(U;Y) - \mathbb{I}(U;V)) \qquad (27)$$

$$= \mathbb{I}(U;Y) - \alpha \, \mathbb{I}(U;V) \qquad (28)$$

with $\mathcal{M} = \mathcal{L}_{U|Y} \cap \mathcal{H}_{U|V'}$. This last step requires $P_{V|U} \preceq P_{Y|U}$ to ensure aligned polarization indices and $\mathcal{L}_{U|V'} \subseteq \mathcal{L}_{U|Y}$. If this assumption does not hold, one can use a chaining construction. The randomized encoders and decoders from [7], [6], [9] prove the existence of an encoder and a decoder with message set $\mathcal{M}$ for which the error probability $\Pr(\varepsilon_{\text{iid}})$ scales as $\mathcal{O}$ (2$^{-n^\beta}$), $0 < \beta < \frac{1}{2}$, when communicating over the channel $P_{Y|UV}$ with i.i.d. side information $V$.

It remains to show this scheme is also viable when $S$ is not i.i.d. $\text{Ber}(\frac{n_1}{n})$ but of fixed type $p^* = (n_1, n_2)$. Let $\Pr(\varepsilon_p)$ be the error probability conditioned on $s^n$ being of type $p$, $\mathcal{P}_n$ be the set of all types of length $n$ on the binary alphabet, and $p_{sn}$ be the type of $s^n$. The bounds [27, Lemmas II.1, II.2] yield $\Pr(p_{S^n} = p^*) \geq \frac{1}{n}$ and thus

$$\Pr(\mathcal{E}_{p^*}) \leq n \sum_{p \in \mathcal{P}_n} \Pr(p_{S^n} = p) \Pr(\mathcal{E}_p) = n \Pr(\mathcal{E}_{\text{iid}}). \qquad (29)$$

Therefore, the error probability when using the polar coding scheme constructed for i.i.d. $S$ over the channel with partial side information of length $n_1$ and a random interleaver goes to 0 as $\mathcal{O}$ (2$^{-n^\beta}$), proving there exists an interleaver at least as good as this average.

The above proves the existence of TSA encoders and decoders, and positions at which the partial side information is available, such that the error probability can approach zero and the rate approach $\mathbb{I}(U;Y_1) - \alpha \mathbb{I}(U;V)$. We obtain the same result for receiver 2 with rate approaching $\mathbb{I}(V;Y_2) - (1 - \alpha)\mathbb{I}(U;V)$. That is, following [28], the randomized encoders and decoders can be replaced by deterministic ones, which leaves the interleavers as random. Empirical results show the polarization speed depends on the interleaver. Using no interleaver works well with the natural decoding order on $\bar{x}^n$ as defined by (14)-(18). We next demonstrate that TSA polar coding without an interleaver can perform better than time-sharing when using this natural decoding order.

*D. Numerical Results over the Blackwell Channel*

Consider the Blackwell channel [25], which is a noiseless BC with a ternary input and two binary outputs. The channel has the mapping $\mathcal{X} \to \mathcal{Y}_1 \times \mathcal{Y}_2$, $0 \mapsto (0,0)$, $1 \mapsto (0,1)$, $2 \mapsto (1,0)$. Being noiseless, its capacity region is known [3], [26]. The sum rate-optimal input distribution is uniform on $\mathcal{X}$ which implies $Y_1 = U \sim \text{Ber}(\frac{1}{3})$, $Y_2 = V$, $V|(U = 0) \sim \text{Ber}(\frac{1}{2})$,

Figure 3. Simulated decoder error probabilities vs. back-off from sum capacity
$C = \log_2 3$ bpcu over the Blackwell channel using SCL-32 decoding. The
time-sharing fraction is $\alpha = 1/2$ so $R_1 = R_2$.

and $V|(U = 1) \sim \text{Ber}(0)$. The corner rates are 2/3 bpcu for the GP coded user and $\approx 0.918$ bpcu for the marginally coded user with sum-rate $\log_2 3 \approx 1.585$ bpcu. To compare TSA polar coding with time-sharing, we choose $\alpha = \frac{1}{2}$.

Fig. 3 compares the total error probability of TSA and time-shared polar coding under successive cancellation list (SCL) decoding [29] with list size $L = 32$ and block length $n = 2048$. The codes are constructed by computing the entropies $\mathbb{H}(\bar{U}_i|\bar{U}^{i-1}, V'^n)$ for each user and using all bit channels with entropy above a specified threshold $1 - \delta$ for data. The order of the polarization stages, and thus the decoding order of $\bar{x}^n$, is chosen to apply the largest butterflies, i.e., the $(i, i + \frac{n}{2})$ butterflies, to $x^n$ first. Using no interleaver and this decoding order, TSA encoding ( ) operates closer to the sum capacity than time sharing for the same error probability. We compare with time-sharing and $n = 1024$ ( ), i.e., individual blocks have length $n = 1024$, and time sharing with $n = 2048$ ( ).

The improved performance is because the transformed channels of a $2 \times 2$ butterfly are at least as polarized as the initial channels. That is, the first transformed channel is at least as unreliable as the less reliable of the initial two channels, and the second transformed channel is at least as reliable as the more reliable of the initial two channels [30]. The degree of polarization of the transformed bit channels can be improved by pairing two channels of different reliability. This is a useful heuristic to match parallel channels with different reliability to polar code symbols, c.f. [31]. By using a decoding order such that the indices $i$ and $i + \frac{n}{2}$ form a butterfly, time-shifting with $\alpha = \frac{1}{2}$ and using the identity interleaver causes every butterfly in the first polarization stage to see two different channels. For time-sharing, every butterfly in the first stage sees two identical channels. This improves the degree to which the bit channels are polarized under time-shifting compared to time-sharing.

## V. CONCLUSIONS

We presented TSA-GP encoding as a new coding technique for BCs. The scheme can approach rate tuples between the Marton region corner points without time-sharing or rate-splitting. The scheme increases the rates compared to time-sharing for short block lengths and has lower complexity than rate-splitting. TSA encoding can be implemented with polar codes, and numerical results confirm the anticipated rate gains.

## REFERENCES

[1] I. Csiszár and J. Körner, Information Theory: Coding Theorems for Discrete Memoryless Channels. Budapest: Akadémiai Kiad6, 1981.

[2] G. Kramer, "Capacity results for the discrete memoryless network," IEEE Trans. Inf. Theory, vol. 49, no. 1, pp. 4-21, 2003.

[3] K. Marton, "A coding theorem for the discrete memoryless broadcast channel," IEEE Trans. Inf. Theory, vol. 25, no.

3, pp. 306-311, May 1979.

[4] S. I. Gel'fand and M. S. Pinsker, "Coding for channel with random parameters," Probl. of Contr. and Inf. Theory, vol. 9, no. 1, pp. 19-31, Jan. 1979.

[5] E. Ankan, "Channel polarization: A method for constructing capacity-achieving codes for symmetric binary-input memoryless channels," IEEE Trans. Inf. Theory, vol. 55, no. 7, pp. 3051-3073, Jun. 2009.

[6] J. Honda and H. Yamamoto, "Polar coding without alphabet extension for asymmetric models," IEEE Trans. Inf. Theory, vol. 59, no. 12, pp. 7829-7838, Sep. 2013.

[7] S. B. Korada and R. L. Urbanke, "Polar codes are optimal for lossy source coding," IEEE Trans. Inf. Theory, vol. 56, no. 4, pp. 1751-1768, Mar. 2010.

[8] E. Ankan, "Polar coding for the Slepian-Wolf problem based on monotone chain rules," in Proc. IEEE Int. Symp. Inf. Theory (ISIT), Cambridge, MA, Jul. 2012, pp. 566-570.

[9] N. Goela, E. Abbe, and M. Gastpar, "Polar codes for broadcast channels," IEEE Trans. Inf. Theory, vol. 61, no. 2, pp. 758-782, Feb. 2015.

[10] M. Mondelli, S. H. Hassani, I. Sason, and R. L. Urbanke, "Achieving Marton's region for broadcast channels using polar codes," IEEE Trans. Inf. Theory, vol. 61, no. 2, pp. 783-800, Feb. 2015.

[11] L. Liu, "Polar codes and polar lattices for efficient communication and source quantization," Doctoral Dissertation, Imperial College London, Sep. 2016.

[12] M. Y. Şener, R. Böhnke, W. Xu, and G. Kramer, "Dirty paper coding based on polar codes and probabilistic shaping," *IEEE Commun. Lett.,* pp. 3810-3813, Sep. 2021.

[13] M. Y. Sener, R. Böhnke, and W. Xu, "A practical dirty paper coding scheme for MISO broadcast channels," in Proc. IEEE Global Commun. Conf, Rio de Janeiro, Brazil, Dec. 2022, pp. 215-220.

[14] M. Y. Şener, R. Böhnke, W. Xu, and G. Kramer, "Achieving the dirty paper channel capacity with scalar lattices and probabilistic shaping," *IEEE Commun. Lett.,* vol. 28, no. 1, pp. 29-33, Jan. 2024.

[15] A. Carleial, "Interference channels," IEEE Trans. Inf. Theory, vol. 24, no. 1, pp. 60-70, Jan. 1978.

[16] J. Hou, J. Smee, H. Pfister, and S. Tomasin, "Implementing interference cancellation to increase the EV-DO Rev A reverse link capacity," IEEE Commun. Mag., vol. 44, no. 2, pp. 58-64, Feb. 2006.

[17] L. Sankar, G. Kramer, and N. B. Mandayam, "Offset encoding for multiple-access relay channels," IEEE Trans. Inf. Theory, vol. 53, no. 10, pp. 3814-3821, Sep. 2007.

[18] M. Yassaee and M. Aref, "Slepian-Wolf coding over cooperative relay networks," IEEE Trans. Inf. Theory, vol. 57, no. 6, pp. 3462-3482, Aug. 2011.

[19] S. Lim, Y.-H. Kim, A. El Gamal, and S.-Y. Chung, "Noisy network coding," IEEE Trans. Inf. Theory, vol. 57, no. 5, pp. 3132-3152, May 2011.

[20] E. Ankan, "Source polarization," in Proc. IEEE Int. Symp. Inf. Theory (ISIT), Austin, TX, Jun. 2010, pp. 899-903.

[21] L. Liu, Y. Yan, C. Ling, and X. Wu, "Construction of capacity-achieving lattice codes: Polar lattices," IEEE Trans. Common., vol. 67, no. 2, pp. 915-928, Oct. 2018.

[22] T. Cover, "Broadcast channels," IEEE Trans. Inf. Theory, vol. 18, no. 1, pp. 2-14, Jan. 1972.

[23] A. El Gamal and E. van der Meulen, "A proof of Marton's coding theorem for the discrete memoryless broadcast channel (corresp.)," IEEE Trans. Inf. Theory, vol. 27, no. 1, pp. 120-122, Jan. 1981.

[24] Y. Liang, G. Kramer, and H. V. Poor, "On the equivalence of two achievable regions for the broadcast channel," IEEE Trans. Inf. Theory, vol. 57, no. 1, pp. 95-100, 2011.

[25] E. van der Meulen, "Random coding theorems for the general discrete memoryless broadcast channel," IEEE Trans. Inf. Theory, vol. 21, no. 2, pp. 180-190, Mar. 1975.

[26] M. S. Pinsker, "Capacity of noiseless broadcast channel," Probl. Pere-dachi Inf., vol. 14, no. 2, pp. 28-34, Jun. 1978.

[27] I. Csiszár, "The method of types," IEEE Trans. Inf. Theory, vol. 44, no. 6, pp. 2505-2523, Oct. 1998.

[28] R. A. Chou and M. R. Bloch, "Using deterministic decisions for low-entropy bits in the encoding and decoding of polar codes," in Proc. Allerton Conf. Common., Contr., Comput., Monticello, IL, Oct. 2015, pp. 1380-1385.

[29] I. Tal and A. Vardy, "List decoding of polar codes," IEEE Trans. Inf. Theory, vol. 61, no. 5, pp. 2213-2226, Mar. 2015.

[30] J. Kim and J. Lee, "Polar codes for non-identically distributed channels," EURASIP J. Wireless Common. Netw., no. 287, Jul. 2016.

[31] T. Wiegart, T. Prinz, F. Steiner, and P. Yuan, "Design of polar codes for parallel channels with an average power constraint," in Proc. IEEE Int. Symp. Inf. Theory (ISIT), Paris, France, Jul. 2019, pp. 1942-1946.

**List of Reference Numerals**

| m1 | first stream-block |
| m2 | second stream-block |
| t1, t2...t2+1 | time index |
| u | first signal |
| v | second signal |
| g(u,v) | combined signal |
| 100 | transceiver |
| 101 | control unit |
| 102 | receiver |

**Claims**

1. Signal transfer method for the transmission and reception of encoded signals between at least one sender (100) and multiple receivers (102) over a common communication channel, the method comprising the following steps:

   - providing at least two separate streams, namely at least a first stream and a second stream, of information to be encoded and simultaneously transmitted over the channel by the sender (100), wherein the first stream is for a first receiver (102) and comprises at least one first stream-block ($m_1$) and the second stream is for a second receiver (102) and comprises at least one second stream-block ($m_2$);
   - encoding at least the first stream as a first signal (u) and the second stream as a second signal (v) and transmitting an addition (g(u,v)) of the first signal (u) with the second signal (v) over the channel; wherein:
   - encoding of the first stream is delayed with respect to encoding the second stream, wherein at least one first stream-block ($m_1$) of the first stream and at least one second stream-block ($m_2$) of the second stream at least partially time-overlap, which is defined as overlap with respect to time; wherein
   - one second stream-block ($m_2$) of the second stream is encoded to be a second block-code using a first coding method; and
   - after said second stream-block ($m_2$) is encoded, encoding one first stream-block ($m_1$) of the first stream using, at least partially, a dirty-paper-coding method.

2. Signal transfer method according to claim 1, wherein, during the at least partially dirty-paper-coding of the first stream-block ($m_1$) of the first stream, information of the second block-code is used as a primary side-information for the at least partially dirty-paper-coding of the first stream-block ($m_1$) of the first stream.

3. Signal transfer method according to claim 2, wherein, during the at least partially dirty-paper-coding of the first stream-block ($m_1$) of the first stream, the primary side-information is the portion of the second block-code of the second stream-block (m2) which time-overlaps with the first stream-block ($m_1$).

4. Signal transfer method according to claims 2 or 3; wherein, during the at least partially dirty-paper-coding of the first stream-block ($m_1$) of the first stream, the first stream-block ($m_1$) is encoded only partially, especially not completely, using the partial dirty-paper-coding method with the primary side-information.

5. Signal transfer method according to claim 4, wherein, with the partial dirty-paper-coding of the first stream-block ($m_1$) with the primary side-information, a remaining part of the first stream-block ($m_1$) is encoded simultaneously using the dirty-paper-coding method with auxiliary side-information.

6. Signal transfer method according to claim 5 with claim 2, wherein the auxiliary side-information is different from primary side-information.

7. Signal transfer method according to claim 6, wherein the auxiliary side-information comprises at least one of a probability distribution out of P(ulv), P(ulv), P(u,v), P(u), and P(v).

8. Signal transfer method according to any one of the foregoing claims, wherein the first coding method is point-to-point-coding such as polar-coding and/or and/or Low-Density-Parity-Check-coding.

9. Signal transfer method according to any one of the foregoing claims, wherein the dirty-paper-coding is Costa precoding and/or Tomlinson-Harashima precoding and/or Vector-perturbation by Hochwald and/or polar code-based dirty paper coding and/or lattice-based dirty paper coding.

10. Signal transfer method according to any one of the foregoing claims, wherein the first stream and the second stream are bit streams.

11. Signal transfer method according to claim 10, wherein a bit-size respectively of the at least one first stream-block ($m_1$) of the first stream and the at least one second stream-block ($m_2$) of the second stream are the same.

12. Sender (100), for example a transceiver, comprising a control unit (101) configured to perform the signal transfer method according to any one of the foregoing claims.

# Fig. 1

$m_1^{(t_1)}$  $m_1^{(t_1+1)}$  102

u $\cdots$ | n | $P_{U|V}$ | $P_U$ | $P_{U|V}$ | $\cdots$ → g(u,v)

v $\cdots$ | n | $P_{V|U}$ | $P_V$ | $\cdots$ →

$m_2^{(t_2)}$  $m_2^{(t_2+1)}$

# Fig. 2

100

101

g(u,v) → 102

g(u,v) → 102

EP 4 675 948 A1

Europäisches
Patentamt

European
Patent Office

Office européen
des brevets

# EUROPEAN SEARCH REPORT

**Application Number**

EP 24 18 5783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GANGULY SHOUVIK ET AL: "Sliding-Window Gelfand-Pinsker Coding: General K-User Broadcast Channels", 2020 IEEE INFORMATION THEORY WORKSHOP (ITW), IEEE, 11 April 2021 (2021-04-11), pages 1-5, XP033929850, DOI: 10.1109/ITW46852.2021.9457616 [retrieved on 2021-06-16] * figure 3 * * section I, section II-B * | 1-12 | INV. H04L1/00 H04L25/497 |
| A | SANKAR L ET AL: "Offset Encoding for Multiple-Access Relay Channels", IEEE TRANSACTIONS ON INFORMATION THEORY, IEEE, USA, vol. 51, no. 10, 1 October 2007 (2007-10-01), pages 3814-3821, XP011192546, ISSN: 0018-9448, DOI: 10.1109/TIT.2007.904791 * figure 4 * * section IV * | 1-12 | |
| A | SENER M YUSUF ET AL: "Dirty Paper Coding Based on Polar Codes and Probabilistic Shaping", IEEE COMMUNICATIONS LETTERS, IEEE SERVICE CENTER, PISCATAWAY, NJ, US, vol. 25, no. 12, 17 September 2021 (2021-09-17), pages 3810-3813, XP011892531, ISSN: 1089-7798, DOI: 10.1109/LCOMM.2021.3113722 [retrieved on 2021-12-08] * figure 1 * * section II * | 1-12 | TECHNICAL FIELDS SEARCHED (IPC) H04L |

The present search report has been drawn up for all claims

| Place of search | Date of completion of the search | Examiner |
|---|---|---|
| Munich | 5 December 2024 | Vucic, Jelena |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 101286824 B
- EP 1597883 B1
- EP 2149217 B1
- EP 3207656 B1
- EP 3244674 B1
- EP 3662597 B1
- EP 3791688 B1
- US 8626177 B2
- US 8422955 B2
- US 8442441 B2

### Non-patent literature cited in the description

- **CONSTANTIN RUNGE** ; **GERHARD KRAMER**. Time-Shifted Alternating Gelfand-Pinsker Coding for Broadcast Channels. *IEEE International Symposium on Information Theory*, 2024
- **I. CSISZÁR** ; **J. KÖRNER**. Information Theory: Coding Theorems for Discrete Memoryless Channels. Budapest: Akadémiai Kiad6, 1981
- **G. KRAMER**. Capacity results for the discrete memoryless network. *IEEE Trans. Inf. Theory,*, 2003, vol. 49 (1), 4-21
- **K. MARTON**. A coding theorem for the discrete memoryless broadcast channel. *IEEE Trans. Inf. Theory*, May 1979, vol. 25 (3), 306-311
- **S. I. GEL'FAND** ; **M. S. PINSKER**. Coding for channel with random parameters. *Probl. of Contr. and Inf. Theory*, January 1979, vol. 9 (1), 19-31
- **E. ANKAN**. Channel polarization: A method for constructing capacity-achieving codes for symmetric binary-input memoryless channels. *IEEE Trans. Inf. Theory*, June 2009, vol. 55 (7), 3051-3073
- **J. HONDA** ; **H. YAMAMOTO**. Polar coding without alphabet extension for asymmetric models. *IEEE Trans. Inf. Theory*, September 2013, vol. 59 (12), 7829-7838
- **S. B. KORADA** ; **R. L. URBANKE**. Polar codes are optimal for lossy source coding. *IEEE Trans. Inf. Theory*, March 2010, vol. 56 (4), 1751-1768
- **E. ANKAN**. Polar coding for the Slepian-Wolf problem based on monotone chain rules. *Proc. IEEE Int. Symp. Inf. Theory (ISIT), Cambridge, MA*, July 2012, 566-570
- **N. GOELA** ; **E. ABBE** ; **M. GASTPAR**. Polar codes for broadcast channels. *IEEE Trans. Inf. Theory*, February 2015, vol. 61 (2), 758-782
- **M. MONDELLI** ; **S. H. HASSANI** ; **I. SASON** ; **R. L. URBANKE**. Achieving Marton's region for broadcast channels using polar codes. *IEEE Trans. Inf. Theory,*, February 2015, vol. 61 (2), 783-800
- **L. LIU**. Polar codes and polar lattices for efficient communication and source quantization. *Doctoral Dissertation, Imperial College London*, September 2016
- **M. Y. SENER** ; **R. BÖHNKE** ; **W. XU**. A practical dirty paper coding scheme for MISO broadcast channels. *Proc. IEEE Global Commun. Conf, Rio de Janeiro, Brazil*, December 2022, 215-220
- **A. CARLEIAL**. Interference channels. *IEEE Trans. Inf. Theory*, January 1978, vol. 24 (1), 60-70
- **J. HOU** ; **J. SMEE** ; **H. PFISTER** ; **S. TOMASIN**. Implementing interference cancellation to increase the EV-DO Rev A reverse link capacity. *IEEE Commun. Mag.*, February 2006, vol. 44 (2), 58-64
- **L. SANKAR** ; **G. KRAMER** ; **N. B. MANDAYAM**. Offset encoding for multiple-access relay channels. *IEEE Trans. Inf. Theory*, September 2007, vol. 53 (10), 3814-3821
- **M. YASSAEE** ; **M. AREF**. Slepian-Wolf coding over cooperative relay networks. *IEEE Trans. Inf. Theory*, August 2011, vol. 57 (6), 3462-3482
- **S. LIM** ; **Y.-H. KIM** ; **A. EL GAMAL** ; **S.-Y. CHUNG**. Noisy network coding. *IEEE Trans. Inf. Theory*, May 2011, vol. 57 (5), 3132-3152
- **E. ANKAN**. Source polarization. *Proc. IEEE Int. Symp. Inf. Theory (ISIT), Austin, TX*, June 2010, 899-903
- **L. LIU** ; **Y. YAN** ; **C. LING** ; **X. WU**. Construction of capacity-achieving lattice codes: Polar lattices. *IEEE Trans. Common.*, October 2018, vol. 67 (2), 915-928
- **T. COVER**. Broadcast channels. *IEEE Trans. Inf. Theory*, January 1972, vol. 18 (1), 2-14
- **A. EL GAMAL** ; **E. VAN DER MEULEN**. A proof of Marton's coding theorem for the discrete memoryless broadcast channel (corresp.). *IEEE Trans. Inf. Theory*, January 1981, vol. 27 (1), 120-122

- **Y. LIANG** ; **G. KRAMER** ; **H. V. POOR**. On the equivalence of two achievable regions for the broadcast channel. *IEEE Trans. Inf. Theory,*, 2011, vol. 57 (1), 95-100
- **E. VAN DER MEULEN**. Random coding theorems for the general discrete memoryless broadcast channel. *IEEE Trans. Inf. Theory*, March 1975, vol. 21 (2), 180-190
- **M. S. PINSKER**. Capacity of noiseless broadcast channel. *Probl. Pere-dachi Inf.,*, June 1978, vol. 14 (2), 28-34
- **I. CSISZÁR**. The method of types. *IEEE Trans. Inf. Theory*, October 1998, vol. 44 (6), 2505-2523
- **R. A. CHOU** ; **M. R. BLOCH**. Using deterministic decisions for low-entropy bits in the encoding and decoding of polar codes. *Proc. Allerton Conf. Common., Contr., Comput., Monticello, IL*, October 2015, 1380-1385
- **I. TAL** ; **A. VARDY**. List decoding of polar codes. *IEEE Trans. Inf. Theory*, March 2015, vol. 61 (5), 2213-2226
- **J. KIM** ; **J. LEE**. Polar codes for non-identically distributed channels. *EURASIP J. Wireless Common. Netw.*, July 2016 (287)
- **T. WIEGART** ; **T. PRINZ** ; **F. STEINER** ; **P. YUAN**. Design of polar codes for parallel channels with an average power constraint. *Proc. IEEE Int. Symp. Inf. Theory (ISIT), Paris, France*, July 2019, 1942-1946